# EUROPEAN PATENT APPLICATION

(11) **EP 2 063 685 A1**
(43) Date of publication of application: **27.05.2009**
(21) Application number: 07425732.0
(22) Date of filing: 20.11.2007
(51) Int. Cl.: H05B 3/86, B29C 70/82, C08J 5/18, C08L 69/00, B32B 17/10

(54) **Plastic glazing**

(71) Applicant: Pilkington Italia S.p.A., 66050 San Salvo (CH) (IT)
(72) Inventor: The designation of the inventor has not yet been filed
(74) Representative: Tonon, Gilberto

(57) **Abstract**

An automotive plastic glazing comprising at least a first ply of a polycarbonate glazing material is provided. The polycarbonate comprises at least one wire embedded into a major surface thereof.

## Description

The present invention relates to plastic glazings, in particular plastic glazings comprising a ply of polycarbonate and further comprising an array of wires.

Plastic glazings are often used in both the automotive and aeronautical industries to provide lightweight impact resistant glazings. Typically such glazings comprise at least one ply of polycarbonate (a polymer comprising functional groups linked together by carbonate groups). Plies of polycarbonate are also commonly used as part of the laminate structure of bullet-proof glazings, where they impart excellent impact resistance qualities.

Where a ply of polycarbonate forms part of a glazing with at least one ply of glass, a heating circuit to demist or defrost the glazing may be included easily. One way of doing this is to screen print a heating circuit onto a surface of the ply of glass using an electrically conductive silver-containing ink. Bus bars, for connection to the wiring harness of a vehicle, in the case of an automotive glazing, may also be printed onto the surface of the glass. A second manner in which a heating circuit may be provided is to embed wires within a ply of an interlayer material, such as polyurethane, which may be used as an adhesive layer to bond the ply of polycarbonate to the glass, or as an adhesive or impact resistant layer between two other plies of a multiply laminated glazing. As the wires used to form the heating circuit are thin (having a diameter of less than 150µm) it is vital that they are protected from abrasion or other damage, and therefore cannot be present on the exposed surface of the glazing. Therefore the wires are laid down onto a surface of the polyurethane which will be internal to the glazing when complete.

However for purely plastic glazings that do not comprise any plies of glass, the situation is more complex. It is not possible to provide screen printed heating circuits and bus bars using an electrically conductive silver containing ink, it is necessary to fire the ink at temperatures of 600 - 700°C to achieve maximum conductivity, which is far above the melting point of polycarbonate (267°C). Other inks commonly used in printing automotive glazings are also unsuitable for use with polycarbonate glazings. For example, the solvents used in solvent-based inks may damage the surface of the polycarbonate, leading to crazing and cracking. Such damage becomes more apparent after the circuit is used due to the thermal stresses generated. Water-based inks are, in general, too unstable to be used reliably.

As an alternative, wires forming a heating circuit may be included within the body of the polycarbonate ply. This is done by placing the wires within a mould and injecting liquid polycarbonate, such that the ply forms around the wires. This prevents the wires from being exposed at the surface of the glazing, and therefore reduces the risk of damage to the heating circuit by abrasion. However, the use of such a co-injection method increases the cost of the polycarbonate beyond that which is feasible for most markets.

A third approach is that described in US 4,078,107 and US 4,128,448, which both disclose a lightweight aircraft window having an anti-static circuit and a heating circuit comprised of perpendicular wire arrays. The window comprises a ply of an acrylic thermoplastic material, having an array of wires forming the anti-static circuit embedded in its upper, exposed surface, and an array of wires forming the hearting circuit embedded in its lower, non-exposed surface. The lower surface is laminated with a ply of polycarbonate, which in turn is laminated to a further ply of polycarbonate or glass by a layer of PVB. The structure is designed to prevent optical distortion caused by heating of the PVB material when the heating circuit is active by providing a stiff plastic layer (the upper ply of polycarbonate) between the heating circuit and the PVB.

The wires are embedded into the ply of acrylic by using a hot needle to form a groove in the surface of the ply into which the wire is laid. The ply of acrylic material is then press polished to embed the wires into the surface of the ply to prevent damage to either circuit by abrasion. The acrylic layer itself is scratch resistant. Although the co-injection of liquid polycarbonate is avoided, the window structure relies on the use of a separate wire-carrying layer to form the heating circuit, at additional cost to merely using polycarbonate. This is therefore suitable of a niche market such as lightweight aircraft, but less practicable for mass market automotive production.

It is therefore desirable to find a simple manner in which polycarbonate glazings can be provided with heating circuits making them suitable for automotive use, at reduced cost.

The present invention aims to address the problems of the prior art by providing an automotive plastic glazing comprising at least a first ply of a polycarbonate glazing material, comprising at least one wire embedded into a major surface thereof.

By laying down the wires directly into a surface of the polycarbonate, the production costs of a plastic glazing are reduced. This enables existing wiring equipment, normally used for laying down wires into PVB to be utilised to produce heated plastic glazings.

The glazing may comprise a second ply of glazing material being in contact with and extending across the surface of the first ply glazing material in which the at least one wire is embedded.

Preferably, the at least one wire forms one of an antenna, a heating circuit, a crack detector circuit, a capacitive, an inductive or an electrical supply circuit.

More preferably, the glazing further comprises a plurality of wires arranged in a generally parallel array to form a heating circuit, wherein the glazing is generally rectangular in shape, having two opposing long edges and two opposing short edges, the plurality of wires that extend from one long edge of the glazing to the other.

A pair of bus bars, comprising an upper bus bar and a lower bus bar, may be arranged along each long edge of the glazing, and the wires are sandwiched between the upper and lower bus bars. Preferably, the lower bus bar is coloured black.

The at least one wire may be reticulated. Preferably, the at least one wire has a diameter in the range 50µm to 150µm.

The glazing may comprise a layer of an interlayer material for bonding the second ply of glazing material to the polycarbonate glazing material in which the at least one wire is embedded. In this case, the second ply of glazing material is preferably a ply of silicate glass. The interlayer material is preferably polyurethane.

Alternatively, the second ply of glazing material is preferably also a polycarbonate glazing material. The second ply of polycarbonate glazing material is preferably integrally moulded with the first ply of polycarbonate glazing material

Preferably the ply of polycarbonate glazing material in which the wires are embedded has a thickness in the range 1.0mm to 4.0mm.

The glazing may also further comprise at least one electrical device in electrical connection with the wires embedded into the surface of the first ply of glazing material. Preferably, the electrical device is a light emitting diode.

The glazing may also further comprise at least one device in capacitive or inductive electrical connection with the wires embedded into the surface of the first ply of polycarbonate glazing material.

The invention will now be described by way of example only, and with reference to the accompanying drawings, in which:
Figure 1 is a schematic view of a plastic glazing in accordance with the present invention;
Figure 2 is an exploded schematic cross-section along the lines A-A' in Figure 1;
Figure 3 is an exploded schematic cross-section along the lines B-B' in Figure 1;
Figure 4 is a second schematic cross-section along the lines B-B' in Figure 1; and
Figure 5 is a schematic cross-section of a wired plastic glazing made in accordance with the present invention.

The present invention takes an alternative approach to providing wiring for heating and other circuits within polycarbonate glazings than those of the prior art discussed above. Rather than using co-injection techniques or providing an additional material layer to carry the wires, wires are laid down directly onto the surface of the polycarbonate itself.

The wires are embedded using the processes described in EP 0 443 691, which is common within the automotive glazing industry for laying down wires in the interlayer materials used in laminated glazings, such as poly vinyl butyral. Briefly, such a device comprises an endless support surface, such as a wiring drum, which is rotatable about an axis, for supporting a ply of interlayer material and a wiring head for supplying wire and laying it on to the ply of interlayer material. The support surface and wiring head are movable relative to each other in a direction parallel to the axis, and the wiring head is provided across two terminals to heat the wire, causing it to become embedded within the surface of the interlayer material. As the drum rotates, the wiring head plays out a wire across the surface of the ply of interlayer material. This creates a helix of wire, which when the wire is cut along the join between the two ends of the interlayer material wound around the drum, opens out into a generally parallel array of a plurality of wires.

However, such equipment has not be used previously to lay down wires in polycarbonate glazing materials as the difference in materials properties between polycarbonate materials and interlayer materials such as polyvinyl butyral has resulted in a common belief that such a method would be unsuitable and unsatisfactory.

In the present invention, it has been found, against expectation, that the voltage applied to the wires during the wiring method is sufficient to embed the wires into the surface of the polycarbonate without detrimental effect on either the optical properties of the polycarbonate or the wires themselves. By making a suitable choice of polycarbonate glazing material, such equipment as described above may be used with the same settings as are known in the automotive glazing industry for setting down wires into 0.76mm thick poly vinyl butyral interlayers to lay down wires successfully into polycarbonate glazing materials. Preferably, the layer of polycarbonate glazing material has a thickness in the range 1.0mm to 4.0mm, enabling it to be wound around the endless support surface. Once the wires have been laid down and cut, the ply of polycarbonate glazing material is opened out to reveal an array of generally parallel wires, embedded within the surface of the polycarbonate, such that the wires cannot be touched, scraped or snagged at any point across the surface into which they have been laid.

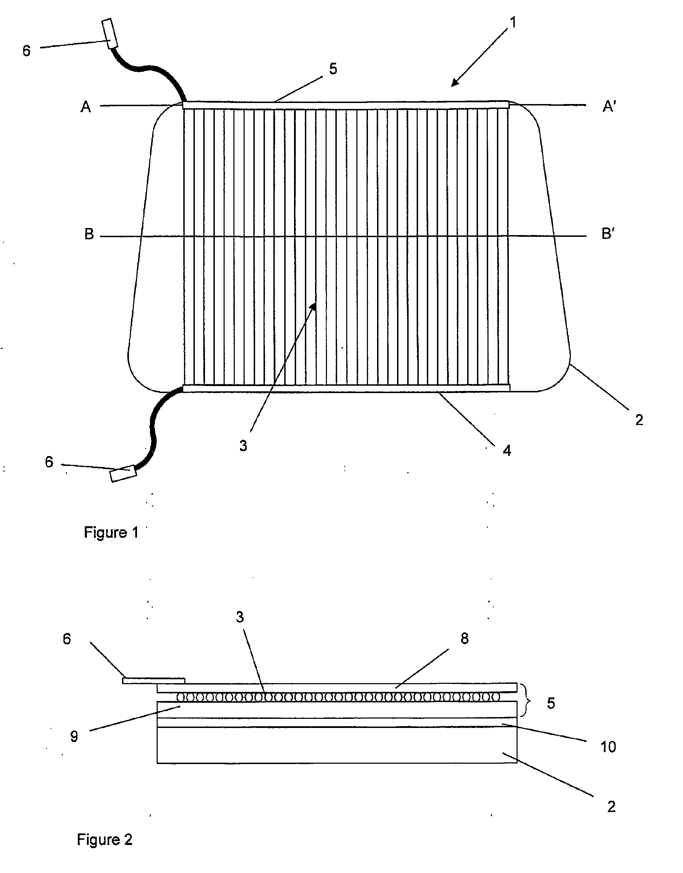

Figure 1 is a schematic view of a plastic glazing in accordance with the present invention. The glazing 1 is generally rectangular in shape, having two opposing long edges and two opposing short edges, with rounded corners. The glazing 1 comprises a ply of polycarbonate glazing material 2 having an array of wires 3 arranged on one surface. This surface will face into a vehicle when fitted. The wires in the array are arranged vertically in a parallel manner, stretching from one long edge of the rectangular glazing to the other. The wires 3 are soldered to first 4 and second 5 bus bars positioned along each long edge of the glazing (shown in more detail in Figure 2) which allow connection into the wiring harness of a vehicle via the connectors 6, 7 soldered to each bus bar 4, 5. The wires of the array are embedded into a major surface of the polycarbonate glazing material

Figure 2 is an exploded schematic cross-section along the lines A-A' in Figure 1. Line A-A' is taken through the glazing in the region of the second bus bar 5, along the shorter of the two long edges of the glazing. The components of the glazing are shown in an exploded view for clarity.

Figure 2 shows the second bus bar 5 comprising a pair of bus bars, one upper 8 and one lower 9, having the wire array 3 sandwiched between them. The lower bus bar 9 comprises a 6mm wide copper tinned strip, coloured black, which is self-adhesive and adheres to the surface of the polycarbonate glazing material via a layer of adhesive 10. The upper bus bar 8 is a 6mm copper tinned strip, and is soldered to the wire array 3 and the lower bus bar 9. The connector 6 is joined to the upper bus bar 8 by a further soldered joint. The ply of polycarbonate 2 in this example is 0.75mm in thickness. The wires forming the array 3 may be copper, tungsten or alloys thereof, and have a diameter in the range 50µm to 150µm. The first bus bar 4 is constructed in the same manner, on the opposing long edge of the glazing.

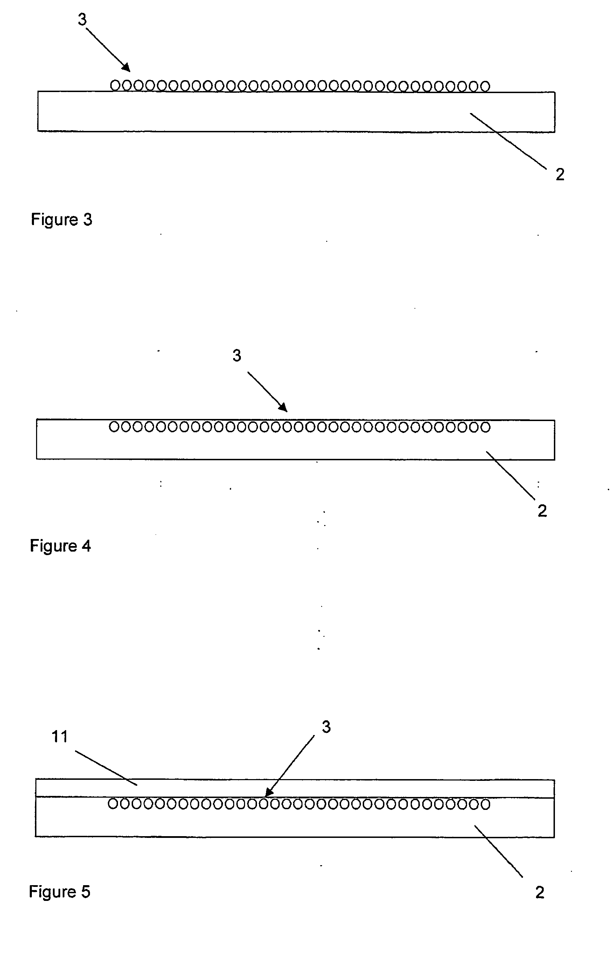

Figure 3 an exploded schematic cross-section along the lines B-B' in Figure 1, and shows the wire array 3 positioned on a surface of the ply of polycarbonate 2. Figure 4 is a second schematic cross-section along the lines B-B' in Figure 1. However, in this view, the wire array 3 is shown embedded in the surface of the ply of polycarbonate 2, such that the wires themselves are not exposed to abrasion or other forms of surface damage. This is as the result of laying down the wires directly into a surface of the ply of polycarbonate 2 itself.

The ply of polycarbonate glazing material into which the wires have been embedded may be included in a laminated glazing, as illustrated in Figure 5. Figure 5 is a schematic cross-section of a wired plastic glazing made in accordance with the present invention. The ply of polycarbonate glazing material 2 containing the wire array 3 is laminated with a second ply of glazing material 11. This may be done with a ply of a suitable interlayer material as an adhesive, such as polyurethane or other compatible interlayer materials. The second ply of glazing material may by a ply of silicate glass, or a sheet of protective film. Alternatively, the second ply of glazing material may also be formed from a polycarbonate glazing material. This may be done using a moulding process, where the wired polycarbonate glazing material is placed within a mould, and liquid polycarbonate poured in. In this situation, on solidification, the further ply of polycarbonate glazing material is integrally moulded with the original wired ply.

In the figures, the wires in the array 3 are shown as being straight. However, the wires themselves may be randomly reticulated in the usual manner well known in the art to avoid polarisation and other optical effects. Even if the wires are reticulated, they are still arranged in a generally parallel manner. If the plastic glazing is generally trapezoid in shape, the wires may extend into the edge regions of the glazing as well as being arranged in a generally parallel manner in the central region of the glazing. Although in the above examples, the wires extend in a generally parallel manner vertically, from one long edge of the glazing to the other, the wires may of course alternatively extend horizontally, from one short edge of the glazing to the other. Alternatively, wires may extend both horizontally and vertically, forming a grid pattern. Such wires may be laid down in the same or in opposite surfaces of the ply of polycarbonate glazing material.

Glazings used in automotive vehicles, such as windscreens, backlights and fixed (non-opening) sidelights are provided with an opaque black band around the edge of the glazing, known as an obscuration band. This is typically screen-printed using a ceramic frit ink. The purpose of the obscuration band is two-fold: firstly, it conceals the adhesive used to bond the glazing into a vehicle, protecting it to exposure from UV radiation; secondly, it is used for aesthetic effect. However, as discussed above, it is not possible to print such obscuration bands onto plastic glazings, such as polycarbonate. In the present invention, this problem is overcome by providing the lower bus bar 10 with a black coating, such that it acts as an obscuration band when fitted into a vehicle. Further black coloured regions may be provided along the short edges of the glazing if desired.

In order to test the principle of laying down the wires directly onto the surface of the polycarbonate, and embedding them therein, a glazing having the structure shown in Figures 1 to 4 was prepared. The wires forming the array had a resistance of 140Ω, generating a current of 32A at 13V (the voltage supplied by a typical vehicle battery). The wire array was subjected to a voltage of 2.4V at 20A continuously for 8 hours. The resultant power was 48W (5.6W/dm²), giving a temperature of 52°C to 56°C on the surface of the polycarbonate opposite to that in which the wires were embedded. The polycarbonate itself remained undamaged at the end of the test. The temperatures achieved were sufficient for the wire array to act as a heating circuit in a plastic glazing.

The glazing 1 is suitable for use as an automotive glazing, such as a windscreen, a backlight, a sidelight or a rooflight for a vehicle. In the above examples, a heating circuit has been used as the wired circuit. However, the present invention is not limited to the production of heating circuits, but may be used to provide any form of electrical circuit within an automotive glazing. For example, at least one wire may be laid down to create an antenna, a crack detector circuit, a capacitive, an inductive or an electrical supply circuit (for any form of electrical device such a s a sensor, a camera or a global positioning system), which may be instead of or in addition to the use of a plurality of wires arranged in a generally parallel manner forming a heating circuit. If required, electrical devices, such as light emitting diodes, may be connected to the wires laid down into the ply of polycarbonate glazing material. Alternatively, electrical devices may be connected to the wires via a capacitive or inductive electrical connection.

## Claims

1. An automotive plastic glazing comprising at least a first ply of a polycarbonate glazing material, comprising at least one wire embedded into a major surface thereof.

2. The glazing of claim 1, further comprising a second ply of glazing material being in contact with and extending across the surface of the first ply glazing material in which the at least one wire is embedded.

3. The glazing of claim 1, wherein the at least one wire forms one of an antenna, a heating circuit, a crack detector circuit, a capacitive, an inductive or an electrical supply circuit.

4. The glazing of claim 3, further comprising a plurality of wires arranged in a generally parallel array to form a heating circuit, wherein the glazing is generally rectangular in shape, having two opposing long edges and two opposing short edges, the plurality of wires that extend from one long edge of the glazing to the other.

5. The glazing of claim 4, wherein a pair of bus bars, comprising an upper bus bar and a lower bus bar, are arranged along each long edge of the glazing, and the wires are sandwiched between the upper and lower bus bars.

6. The glazing of claim 5, wherein the lower bus bar is coloured black.

7. The glazing of any preceding claim, wherein the at least one wire is reticulated.

8. The glazing of any preceding claim, wherein the at least one wire has a diameter in the range 50µm to 150µm.

9. The glazing of claim 2, further comprising a layer of an interlayer material for bonding the second ply of glazing material to the polycarbonate glazing material in which the at least one wire is embedded.

10. The glazing of claim 8 or 9, in which the second ply of glazing material is a ply of silicate glass.

11. The glazing of claim 10, wherein the interlayer material is polyurethane.

12. The glazing of claim 8, wherein the second ply of glazing material is polycarbonate glazing material.

13. The glazing of claim 12, wherein the second ply of polycarbonate glazing material is integrally moulded with the first ply of polycarbonate glazing material

14. The glazing of any preceding claim, in which the ply of polycarbonate glazing material in which the wires are embedded has a thickness in the range 1.0mm to 4.0mm.

15. The glazing of any preceding claim, further comprising at least one electrical device in electrical connection with the wires embedded into the surface of the first ply of polycarbonate glazing material.

16. The glazing of claim 15, wherein the electrical device is a light emitting diode.

17. The glazing of any of claims 1 to 14, further comprising at least one device in capacitive or inductive electrical connection with the wires embedded into the surface of the first ply of polycarbonate glazing material.
